# EUROPEAN PATENT APPLICATION

(11) **EP 4 675 793 A1**
(43) Date of publication of application: **07.01.2026**
(21) Application number: 24826114.1
(22) Date of filing: 30.04.2024
(51) Int. Cl.: H01M 50/24, H01M 50/204, H01M 50/249, H01M 50/271, H01M 50/284

(54) **BATTERY PACK AND DEVICE INCLUDING SAME**

(30) Priority: 22.06.2023 KR 20230080513; 22.06.2023 KR 20230080514
(71) Applicant: LG Energy Solution, Ltd., Seoul 07335 (KR)
(72) Inventor: LEE, Seongju, Daejeon 34122 (KR); KIM, Kiyoun, Daejeon 34122 (KR); OH, Sunghoon, Daejeon 34122 (KR); CHO, Hyun, Daejeon 34122 (KR); SHIN, Jongchan, Daejeon 34122 (KR); JEONG, Gyeongsu, Daejeon 34122 (KR)
(74) Representative: Plasseraud IP
(86) International application number: PCT/KR2024/005888
(87) International publication number: WO 2024/262792

(57) **Abstract**

A battery pack according to one embodiment of the present disclosure comprises: a battery cell stack in which a plurality of battery cells are stacked; a pack case which includes an opening portion whose at least one surface is opened, and in which the battery cell stack is housed; a circuit breaker(CB) member which is located between the battery cell stack and the opening portion, and is electrically connected to the battery cell stack; and a cover member which covers the opening portion, wherein the cover member includes a through hole through which the circuit breaker member is exposed to the outside, and a circuit breaker cover section that opens and closes the through hole.

## Description

### [TECHNICAL FIELD]

### Cross Citation with Related Application(s)

This application claims the benefit of Korean Patent Application No. 10-2023-0080513 filed on June 22, 2023 and Korean Patent Application No. 10-2023-0080514 filed on June 22, 2023 in the Korean Intellectual Property Office, the disclosures of which are incorporated herein by reference in their entirety.

The present disclosure relates to a battery pack and a device including the same, and more specifically, to a battery pack that includes a cover member which can be quickly opened and closed in an emergency situation while protecting a circuit breaker(CB) member from an external environment in normal times, and a device including the same.

The present disclosure also relates to a battery pack which discharges some of the water and dust which have inflowed to the outside of the battery pack while preventing water and dust from flowing into the inside of the battery pack, and a device including the same.

### [BACKGROUND]

Secondary batteries, which are highly applicable to various products and exhibit superior electrical properties such as high energy density, etc., are not only commonly applied to portable devices, but also universally applied to an electric vehicle or a hybrid electric vehicle and an energy storage system driven by electrical power sources. The secondary batteries are gaining attention for their primary advantage of remarkably reducing the use of fossil fuels and not generating byproducts from the use of energy, making them a new eco-friendly and energy efficient source of energy.

Currently commercialized secondary batteries include a nickel cadmium battery, a nickel hydrogen battery, a nickel zinc battery, a lithium secondary battery, and the like. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Generally, the lithium secondary battery may be classified based on the shape of the exterior material into a cylindrical or prismatic secondary battery in which the electrode assembly is embedded in a metal can, and a pouch type secondary battery in which the electrode assembly is embedded in a pouch made of an aluminum laminate sheet.

In the case of a secondary battery used for small-sized devices, two to three battery cells are disposed, but in the case of a secondary battery used for a medium- or large-sized device such as automobile, a medium- or large-sized battery module or battery pack in which a large number of battery cells are electrically connected may be used.

In such a battery module or battery pack, a large number of battery cells are connected to each other in series or parallel to form a cell assembly, thereby improving capacity and output. Further, the battery module or battery pack can be mounted together with various control and protection systems such as a BMS (battery management system), and a cooling system to form a battery pack.

In addition, in the event of an emergency situation such as explosion or ignition of the battery module or battery pack, a safety device such as a circuit breaker(CB) that cuts off electrical connection of the battery module or battery pack may be installed. In particular, such safety devices need to be opened and closed quickly and easily in emergency situations while being protected from the user and the external environment in normal times.

However, when the battery module or battery pack is used as an energy storage system which is used for electric power grid, residential, commercial, and UPS (Uninterrupted Power Supply) purposes, the battery module or battery pack may be relatively more exposed to a user and an external environment. At this time, safety devices such as circuit breakers(CB) are also highly likely to be exposed to the user and the external environment.

Accordingly, conventional battery modules and battery packs have a structure in which a safety device such as a circuit breaker(CB) is protected by a cover having a complicated structure, and thus can be effectively cut off from the user and the external environment. However, such conventional battery modules and battery packs require additional tools or a lot of time for separating a cover having a complicated structure, which causes a problem that the safety device cannot be used quickly in an emergency situation.

Therefore, there is a need to develop a technology for a battery pack that includes a cover member that opens and closes so that the safety device can be quickly used in an emergency situation while sufficiently ensuring waterproof and dustproof performance of the safety device in normal times.

In addition, a battery module or a battery pack can be used as an energy storage system. Particularly, when the battery module or the battery pack is used for electric power grid, residential, commercial, and UPS (Uninterrupted Power Supply) purposes, a battery module or a battery pack may be relatively more exposed to an external environment. In this case, there is a possibility that foreign matters such as water and dust generated in the external environment may flow into the inside of the battery module or the battery pack. At this time, if foreign matters such as water or dust flow into the inside of the battery module or battery pack, it may cause a problem such as deterioration of battery performance of the battery module or the battery pack.

That is, considering the environment in which the battery module or the battery pack is used, the battery module or the battery pack needs to prevent foreign matters such as water and dust from flowing into the inside thereof, thereby maintaining battery performance. Therefore, there is a need to develop a technology for a battery pack that can sufficiently ensure waterproof and dustproof performance of the battery pack.

### [DETAILED DESCRIPTION OF THE INVENTION]

### [Technical Problem]

It is an object of the present disclosure to provide a battery pack that includes a cover member which can be quickly opened and closed in an emergency situation while protecting a circuit breaker(CB) member from an external environment in normal times, and a device including the same.

It is another object of the present disclosure to provide a battery pack which discharges some of the water and dust which has inflowed to the outside of the battery pack while preventing water and dust from flowing into the inside of the battery pack, and a device including the same.

The objects of the present disclosure are not limited to the aforementioned objects, and other objects which are not mentioned herein should be clearly understood by those skilled in the art from the following detailed description and the accompanying drawing.

### [Technical Solution]

According to one embodiment of the present disclosure, there is provided a battery pack comprising: a battery cell stack in which a plurality of battery cells are stacked; a pack case which includes an opening portion whose at least one surface is opened, and in which the battery cell stack is housed; a circuit breaker(CB) member which is located between the battery cell stack and the opening portion, and is electrically connected to the battery cell stack; and a cover member which covers the opening portion, wherein the cover member includes a through hole through which the circuit breaker member is exposed to the outside, and a circuit breaker cover section that opens and closes the through hole.

The cover member may include an outer cover, and an inner cover located between the outer cover and the opening portion.

The inner cover may be formed with the inner through hole and the circuit breaker cover section, and the outer cover may be formed with an external through hole through which the circuit breaker cover section is exposed to the outside.

The inner cover may be formed with a pair of spring portions located adjacent to the internal through hole, and the pair of spring portions and the circuit breaker cover section may be coupled with each other.

The pair of spring portions may be integrated with the inner cover.

The circuit breaker cover section includes an auxiliary cover that covers the internal through hole and a button portion that covers the pair of spring portions, and the portions where the button portion and the auxiliary cover come into contact with each other may be coupled to and released from each other.

The circuit breaker cover section may further comprise a first sealing member that surrounds an outer peripheral surface of the internal through hole, and extends toward the auxiliary cover.

The button portion is formed such that a side surface opposite to the side surface in contact with the auxiliary cover is mutually coupled with the pair of spring portions, and the auxiliary cover is formed such that a side surface opposite to the side surface in contact with the button portion is mutually coupled with the outer peripheral surface of the internal through hole.

When a portion coupled to the pair of spring portions is pressed in the button portion, the coupling between the button portion and the auxiliary cover is released, and the auxiliary cover may be opened in a direction toward the outside.

The auxiliary cover includes a first hooking portion that protrudes in a direction toward the button portion, and the button portion includes a second hooking portion that protrudes in a direction toward the auxiliary cover, wherein the first hooking portion and the second hooking portion may be hook-coupled with each other.

The first hooking portion is located at an upper part of the second hooking portion, and when a side surface coupled to the pair of spring portions is pressed in the button portion, the hook coupling between the first hooking portion and the second hooking portion may be released.

The inner cover may further include a central part, an edge part formed along an outer peripheral surface of the central part, and at least one protrusion formed in the central part.

The protrusion may have a structure that protrudes toward the outer cover, and is inclined in a direction from the central part toward the edge part.

The inner cover further includes at least one venting hole formed at a position adjacent to the edge part, and the at least one venting hole may be opened toward the outside of the pack case.

The edge part extends in a direction toward the outer cover, and may cover the outer peripheral surface of the outer cover.

The outer cover includes at least one outer hooking portion which is formed on an outer peripheral surface of the outer cover, and protrudes toward the edge part, and the inner cover includes at least one inner hooking portion which is formed on the edge part, and protrudes toward the central part, wherein the inner hooking portion and the outer hooking portion are hook-coupled with each other, so that the inner cover and the outer cover may be fixed to each other.

A pair of the inner hooking portion and the outer hooking portion that are hook-coupled with each other may be respectively formed at an upper part of the venting hole.

The inner cover includes at least one coupling portion which is located between the protrusion and the edge part, and is formed on an upper part of the outer peripheral surface of the opening portion, and the inner cover further includes at least one bolting member which penetrates through each of the at least one coupling portion, wherein the coupling portion and the bolting member may be bolt-coupled to fix the inner cover and the pack case to each other.

The outer peripheral surface of the coupling portion may protrude toward the outer cover.

The battery pack further comprises a second sealing member which is located between the inner cover and the opening portion, wherein the second sealing member includes at least one through hole formed in a lower part of the at least one coupling portion, respectively, and wherein the coupling portion and the through hole may be volt-coupled with the bolting member.

### [Advantageous Effects]

According to one embodiment, a battery pack of the present disclosure and a device comprising the same allow an auxiliary cover and a button portion included in the circuit breaker cover section for covering the circuit breaker(CB) member to be opened and closed in a one-touch manner, so that the circuit breaker member can be protected from the external environment in normal times, and also the circuit breaker member can be quickly used in an emergency situation.

According to another embodiment, a battery pack of the present disclosure and a device comprising the same include a cover member which covers the opening portion of the pack case, and thus can prevent water and dust from flowing into the inside of the battery pack. In addition, a battery pack of the present disclosure and a device comprising the same include at least one protrusion formed at a central part of the inner cover included in the cover member, so that some of the water and dust that have inflowed can be discharged to the outside of the pack.

The effects of the present disclosure are not limited to the effects mentioned above and additional other effects not described above will be clearly understood from the detailed description and the accompanying drawings by those skilled in the art.

### [BRIEF DESCRIPTION OF THE DRAWINGS]

FIG. 1 is 1 is a perspective view showing a battery pack according to one embodiment of the present disclosure.
FIG. 2 is an enlarged perspective view showing a portion of the battery pack of FIG. 1.
FIG. 3 is an exploded perspective view showing a portion of the battery pack of FIG. 1.
FIG. 4 is an exploded perspective view showing an enlarged portion of the inner cover and the circuit breaker cover section of FIG. 3.
FIG. 5 is an enlarged cross-sectional view showing a portion of the cross section taken along the b-b' axis of FIG. 1.
FIG. 6 is a perspective view showing a state in which the coupling between the auxiliary cover and the button portion included in the circuit breaker cover section are released in a part of the battery pack of FIG. 1.
FIG. 7 is an exploded perspective view showing the cover member and the sealing member of FIG. 3.
FIG. 8 is a top view of the inner cover of FIG. 7.
FIG. 9 is an enlarged perspective view showing a portion of FIG. 8.
FIG. 10 is a perspective view of the outer cover of FIG. 7.
FIG. 11 is an enlarged cross-sectional view showing a portion of the cross section taken along the a-a' axis of FIG. 1.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and thus, the present disclosure is not necessarily limited to those illustrated in the drawings. In the drawings, the thickness of layers, regions, etc. are exaggerated for clarity. In the drawings, the thicknesses of some layers and region are exaggerated for convenience of description.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Now, a battery pack according to embodiments of the present disclosure will be described.

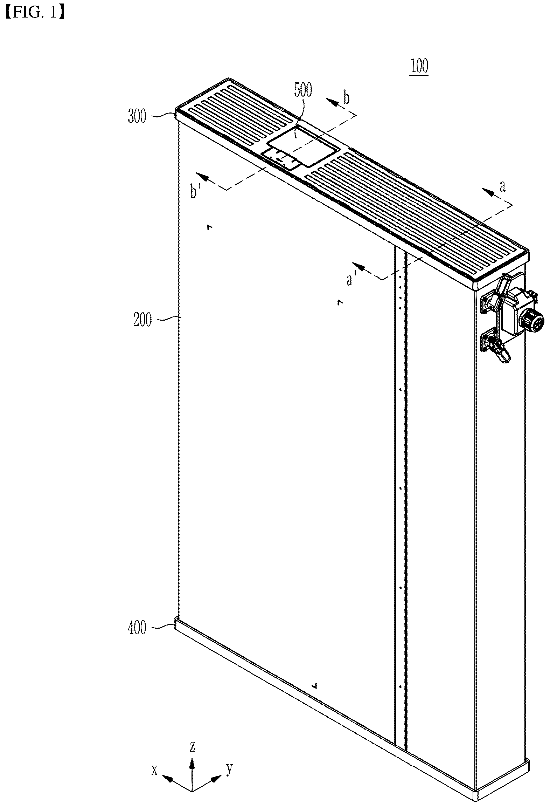

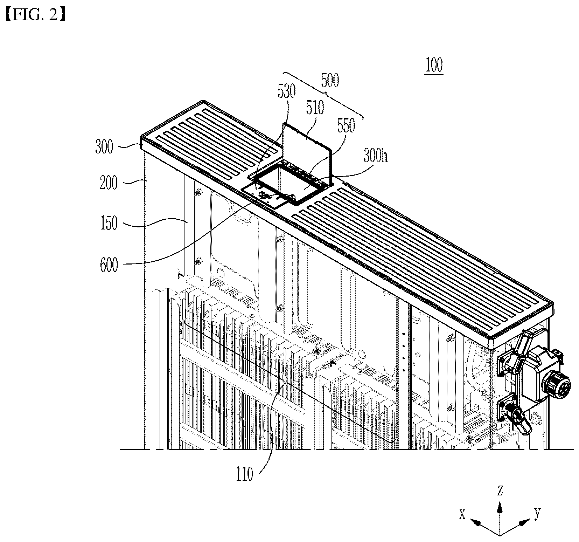

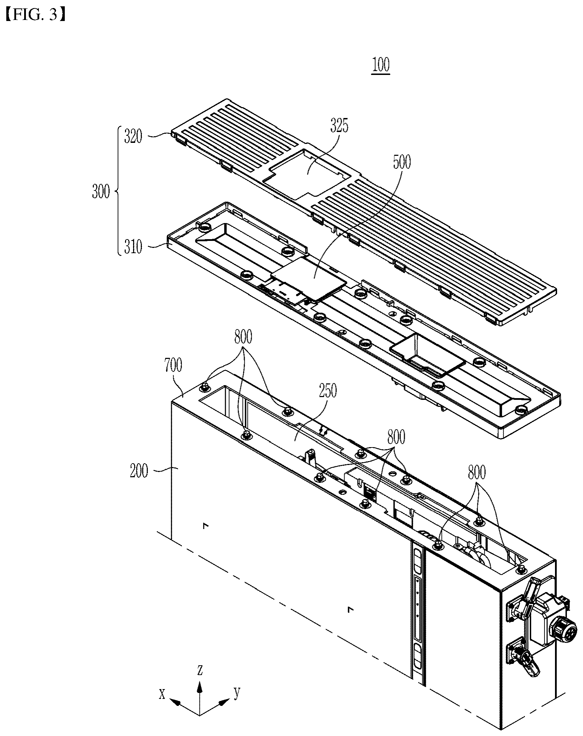

FIG. 1 is 1 is a perspective view showing a battery pack according to one embodiment of the present disclosure. FIG. 2 is an enlarged perspective view showing a portion of the battery pack of FIG. 1. FIG. 3 is an exploded perspective view showing a portion of the battery pack of FIG. 1.

Referring to FIGS. 1 and 2, the battery pack 100 according to one embodiment of the present disclosure includes a battery cell stack 110 in which a plurality of battery cells are stacked; a pack case 200 which includes an opening portion whose at least one surface is opened, and in which the battery cell stack 110 is housed; a circuit breaker(CB) member 600 which is located between the battery cell stack 110 and the opening portion 250, and is electrically connected to the battery cell stack 110; and a cover member 250 which covers the opening portion 250.

The battery cell stack 110 may include a plurality of battery cells. Here, the battery cells may be stacked in one direction to form the battery cell stack 110. In the battery cell stack 110, the plurality of battery cells may be arranged in a direction from one side surface of the pack case 200 to the other side surface, and one side surface and the other side surface of the pack case 200 may be two surfaces that face each other on the basis of the longitudinal direction of the pack case 200. As one example, as shown in FIG. 2, in the battery cell stack 110, a plurality of battery cells may be stacked in a direction toward both sides surface that face each other on the x-axis.

As one example, the battery cells included in the battery cell stack 110 may be cylindrical battery cells of a pouch type, a prismatic type, or a jelly roll type. Preferably, a pouch-type or prismatic-type battery can be used to form a battery cell stack 110 including a large number of battery cells in a limited space inside the battery pack 100. However, the present disclosure is not limited thereto, and any shape that can be easily housed inside the pack case 200 can be applied.

If the battery cell included in the battery cell stack 110 is a pouch-type battery cell, the battery cell may be produced by housing the electrode assembly in a pouch case of a laminate sheet including a resin layer and an inner layer, and then heat-sealing a sealing part of the pouch case. Such a battery cell may be formed in a rectangular sheet-like structure. The battery cells may be configured by a plurality of numbers, and the plurality of battery cells are stacked so as to be electrically connected to each other, thereby forming a battery cell stack. Here, the number of battery cells constituting the battery cell stack 110 may be adjusted according to circumstances.

The pack case 200 can protect the battery cell stack 110 and an electrical component module 150 including electrical components electrically connected thereto from external physical impacts. Here, the structure of the pack case 200 can be applied in various ways, and the material thereof can be made of a metal material having a predetermined strength.

Referring to FIG. 2, in the battery pack 100 according to the present embodiment, a circuit breaker(CB) member 600 may be included in the electrical component module 150 housed in the pack case 200, and the circuit breaker member 600 may be electrically connected to the battery cell stack 110.

As one example, the circuit breaker member 600 may be a member which is configured to include a fuse electrically connected to the battery cell stack 110, and may cut off a fuse when an abnormal event occurs, such as an abnormal operation of the battery pack 100, such as overcharging, over-discharging, or overcurrent. As another example, as shown in FIG. 2, the switch component included in the circuit breaker member 600 may be exposed to the outside of the battery pack 100, so that when an abnormal phenomenon occurs in the battery pack 100 or when desired by the user, it is possible to cut off the electrical connection of the battery cell stack 110 through the switch component. However, the present disclosure is not limited thereto, and the circuit breaker member 600 used herein may be a commonly used circuit breaker component, and any configuration which can cut off the electrical connection inside the battery pack 100 can be applied to the present embodiment.

Accordingly, in the battery pack 100 according to the present embodiment, the circuit breaker member 600 can cut off the electrical connection inside the battery pack 100 when an emergency situation occurs inside or outside the battery pack 100, and may further improve the safety of the battery pack 100.

The pack case 200 may include an opening portion 250 whose at least one surface is opened. As one example, the pack case 200 includes an opening portion 250 in which a portion of the electrical component module 150 is exposed, as shown in FIG. 3, and the battery cell stack 110 may be housed inside the pack case 200. Further, a lower cover 400 which covers the lower surface of the battery cell stack 110 may be coupled to a lower part of the pack case 200 by welding or the like. That is, as shown in FIG. 3, the pack case 200 may be in the form of a mono frame that covers the front and rear surfaces, and both side surface of the battery cell stack 110. As another example, the pack case 200 and the lower cover 400 may be integrated with each other. However, the present disclosure is not limited thereto, and can be applied to the present embodiment as long as it is in the form of a frame that can protect the internal components of the battery module 100.

Accordingly, in the battery pack 100 according to the present embodiment, the pack case 200 includes an opening portion 250 formed on at least one surface, so that the battery cell stack 110 and/or the electrical component module 150 can be easily housed inside the pack case 200.

The cover member 300 may cover the opening portion 250 of the pack case 200. Here, the cover member 300 may extend along the opening portion 250 of the pack case 200. As one example, the cover member 300 may have a size that is equal to or larger than the outer peripheral surface of the opening portion 250 of the pack case 200. In addition, the cover member 300 includes a circuit breaker cover 500, wherein the circuit breaker cover 500 may cover a circuit breaker(CB) member included in the electrical component module 150. Here, the circuit breaker cover 500 may be exposed to the outside through the external through hole 325 included in the outer cover 320.

Accordingly, in the battery pack 100 according to the present embodiment, the pack case 200 includes an opening portion 250 formed on at least one surface, so that the battery cell stack 110 and/or the electrical component module 150 can be easily housed inside the pack case 200. In addition, by including a cover member 300 that covers the opening 250 formed in the pack case 200, it is possible to prevent foreign matters such as water and dust from flowing into the inside of the battery pack 100.

The cover member 300 may include an outer cover 320 and an inner cover 310 located between the outer cover 320 and the opening portion 250. As one example, the cover member 300 may be formed such that an inner cover 310 and an outer cover 320 are sequentially coupled to the opening portion 250 of the pack case 200. As another example, the cover member 300 may be coupled to the opening portion 250 of the pack case 200 in a state in which the inner cover 310 and the outer cover 320 are coupled in advance.

Accordingly, in the battery pack 100 according to this embodiment, the outer cover 320 can primarily prevent foreign matters such as water and dust from entering from the external environment. In addition, the inner cover 310 can secondarily prevent foreign matters such as water and dust failed to be protected by the outer cover 320 from flowing into the inside of the pack case 200.

Referring to FIGS. 1 to 3, in the battery pack 100 according to the present embodiment, the cover member 300 may include through holes 300h and 325 through which the circuit breaker member 600 is exposed to the outside, and a circuit breaker cover section 500 that opens and closes the through holes 300h and 325. Here, the through holes 300h and 325 may include an internal through hole 300h and an external through hole 325.

The inner cover 310 may be formed with an internal through hole 300h through which the circuit breaker member 600 is exposed to the outside, and a circuit breaker cover 500 that opens and closes the internal through hole 300h. In the inner cover 310, the internal through hole 300h communicates with the opening portion 250, so that the circuit breaker member 600 may be exposed to the outside through the opening portion 250 and the internal through hole 300h.

Further, the outer cover 320 may be formed with an external through hole 325 through which the circuit breaker cover section 500 is exposed to the outside. In the outer cover 320, the external through hole 325 may have a size equal to or larger than the internal through hole 300h, so that the circuit breaker member 600 may be exposed to the outside even through the external through hole 325.

Accordingly, in the battery pack 100 according to the present embodiment, if an emergency situation occurs inside or outside the battery pack 100, the circuit breaker member 600 can be relatively easily accessed by the user through the opening portion 250 of the pack case 200 and the through holes 300h and 325 of the cover member 300, thereby quickly cutting off the electrical connection inside the battery pack 100.

Referring to FIGS. 1 to 3, the circuit breaker cover section 500 may cover the circuit breaker member 600 included in the electrical component module 150. In other words, the circuit breaker cover section 500 may cover the through holes 300h and 325 of the cover member 300. More specifically, the circuit breaker cover section 500 may cover the internal through hole 300h formed in the inner cover 310, and the circuit breaker cover section 500 may be exposed to the outside through an external through hole 325 included in the outer cover 320.

Accordingly, in the battery pack 100 according to the present embodiment, the circuit breaker cover section 500 covers the circuit breaker member 600 in normal times, and thus can prevent foreign matters such as water and dust from flowing into the circuit breaker member 600 and the pack case 200. In addition, when an emergency situation occurs inside or outside the battery pack 100, the circuit breaker cover section 500 can be opened or closed, thereby allowing the user to relatively easily access the circuit breaker member 600 and quickly cutting off the electrical connection inside the battery pack 100.

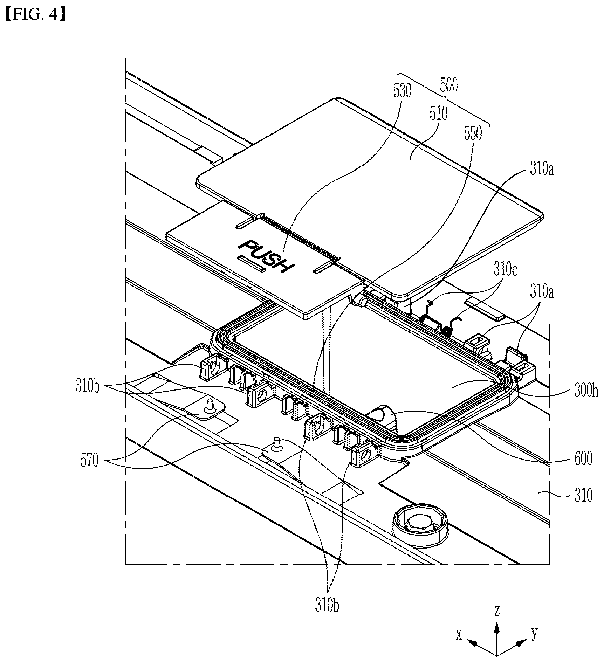

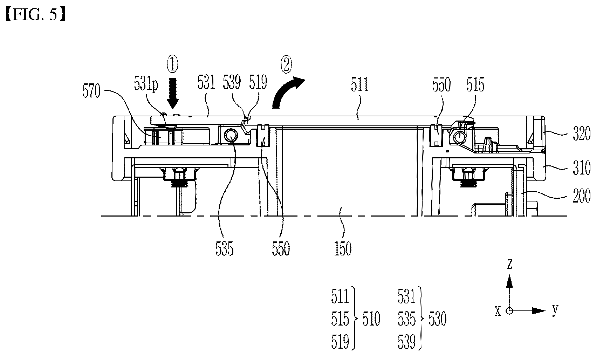

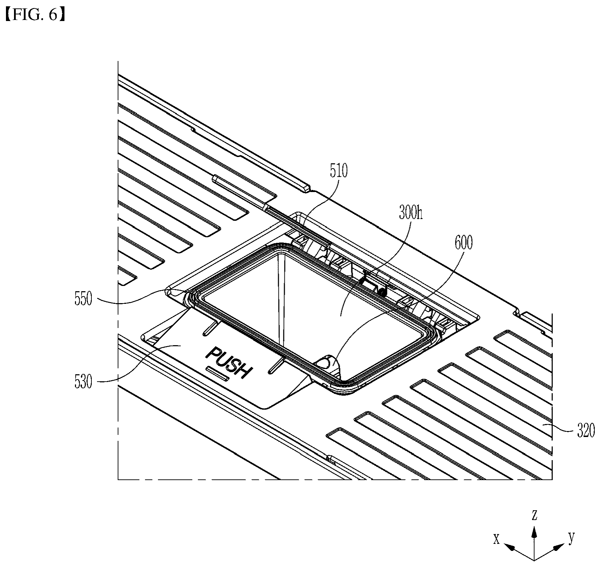

FIG. 4 is an exploded perspective view showing an enlarged portion of the inner cover and the circuit breaker cover section of FIG. 3. FIG. 5 is an enlarged cross-sectional view showing a portion of the cross section taken along the b-b' axis of FIG. 1. FIG. 6 is a perspective view showing a state in which the coupling between the auxiliary cover and the button portion included in the circuit breaker cover section are released in a part of the battery pack of FIG. 1.

Referring to FIGS. 4 and 5, in the battery pack 100 according to the present embodiment, the inner cover 310 may be formed with a pair of spring portions 570 located adjacent to the internal through hole 300h.

As one example, the pair of spring portions 570 may be integrated with the inner cover 310. That is, the pair of spring portions 570 may have a structure in which the spring portions 570 are injection molded together when manufacturing the inner cover 310. As another example, the pair of spring portions 570 may be attached to the inner cover 310 by coupling such as welding. More preferably, the pair of spring portions 570 are integrated with the inner cover 310, so that the number of parts required for manufacturing the battery pack 100 can be minimized.

Referring to FIGS. 4 and 5, in the battery pack 100 according to the present embodiment, the circuit breaker cover section 500 may include an auxiliary cover 510 that covers the internal through hole 300h and a button portion 530 that covers a pair of spring portions 570.

More specifically, the auxiliary cover 510 may include an auxiliary cover surface 511 and an auxiliary cover rotating portion 515 formed at a lower part of the auxiliary cover surface 511, and the button portion 530 may include a button surface 531 and a button rotating portion 535 formed at a lower part of the button surface 531. Further, the button portion 530 may include a button protrusion 531p that is formed at a lower part of the button surface 531, and protrudes toward a pair of spring portions 570. At the lower part of the button surface 531, the button rotating portion 535 may be located adjacent to the internal through hole 300h, and the button protrusion 531p may be located adjacent to the pair of spring portions 570.

The pair of spring portions 570 and the circuit breaker cover section 500 may be coupled to each other. In other words, the button portion 530 included in the circuit breaker cover section 500 may be coupled to a pair of spring portions 570 on a side surface opposite to the side surface in contact with the auxiliary cover 510. More specifically, in the circuit breaker cover section 500, the button protrusion 531p included in the button portion 530 may be hook-coupled with a pair of spring portions 570. Here, the pair of spring portions 570 may have elasticity that presses in a direction toward the button portion 530.

In the auxiliary cover 510, the auxiliary cover surface 511 may extend along the internal through hole 300h, and may have a size that is equal to or larger than the outer peripheral surface of the internal through hole 300h. Further, the auxiliary cover 510 may be formed such that a side surface opposite to the side surface in contact with the button portion 530 is coupled with the outer peripheral surface of the internal through hole 300h. The auxiliary cover rotating portion 515 may be fitted into at least one first connection groove 310a formed in the inner cover 310. That is, the auxiliary cover 510 can open and close the internal through hole 300h as it rotates on the basis of the auxiliary cover rotating portion 515.

In the button portion 530, the button surface 531 may extend from the auxiliary cover 510 to a pair of spring portions 570, and may have a size that can cover a pair of spring portions 570. Further, the button rotating portion 535 may be fitted into at least one second connection groove 310b formed in the inner cover 310. That is, when a portion located at an upper part of the pair of spring portions 570 is pressed in the button portion 530, the button portion 530 may rotate with respect to the button rotating portion 535.

Further, in the battery pack 100 according to the present embodiment, the portions where the button portion 530 and the auxiliary cover 510 come into contact with each other may be coupled to and released from each other. More specifically, when the portion coupled to the pair of spring portion 570 is pressed in the button portion 530, the coupling between the button portion 530 and the auxiliary cover 510 is released, and the auxiliary cover 510 can be opened toward the outside.

More specifically, referring to FIG. 5, the auxiliary cover 510 includes a first hooking portion 519 that protrudes in a direction toward the button portion 530, and the button portion 530 may include a second hooking portion 539 that protrudes in a direction toward the auxiliary cover 510. Here, the first hooking portion 519 and the second hooking portion 539 may be hooked-coupled to each other.

As one example, the first hooking portion 519 may be located in an upper part of the second hooking portion 539. In other words, the second hooking portion 539 may be located in a lower part of the first hooking portion 519. That is, the first hooking portion 519 and the second hooking portion 539 may have a structure in which they face each other in an intersecting manner.

As described above in detail, in a situation where the button portion 530 is not pressed, the pair of spring portions 570 may have elasticity that presses in a direction toward the button portion 530. That is, in a normal situation, the pair of spring portions 570 presses so that the button protrusion 531p formed on the button portion 530 faces upward (z-axis direction), whereby the hook coupling between the first hooking portion 519 and the second hooking portion 539 can be maintained.

Unlike the same, as shown in FIG. 5, when the portion coupled to the pair of spring portion 570 is pressed in the button portion 530, the hook coupling between the first hooking portion 519 and the second hooking portion 539 may be released. That is, when the portion where the button protrusion 531p included in the button portion 530 is located is pressed, the portion where the first hooking portion 519 formed on the button portion 530 is located may be lifted so as face upward (z-axis direction) as shown in FIG. 6. At this time, as the first hooking portion 519 and the second hooking portion 539 are spaced apart by a predetermined distance, the hook coupling between the first hooking portion 519 and the second hooking portion 539 may be released.

In addition, as shown in FIG. 4, the inner cover 310 may further include an auxiliary spring 310c formed between at least one first connecting groove 310a, and the auxiliary spring 310c may have elasticity that allows the portion of the auxiliary cover 510 located adjacent to the button portion 530 to rotate so as face upward (z-axis direction).

That is, in FIG. 5, before pressing the button portion 530, the hook coupling between the first hooking portion 519 and the second hooking portion 539 is maintained, so that the auxiliary cover 510 may cover an internal through hole 300h. Unlike the same, as shown in FIG. 5, when the hook coupling between the first hooking portion 519 and the second hooking portion 539 is released by pressing the button protrusion 531p formed on the button portion 530, the portion of the auxiliary cover 510 where the second hooking portion 539 is located may be rotated so as face upward (z-axis direction). That is, as shown in FIG. 6, the auxiliary cover 510 is rotated so that the portion where the second hooking portion 539 is located so as face upward (z-axis direction), the internal through hole 300h may be opened toward the outside.

Accordingly, in the battery pack 100 according to the present embodiment, in normal times, the coupling between the auxiliary cover 510 and the button portion 530 is maintained, thereby preventing foreign matters such as water and dust from flowing into the circuit breaker member 600 and the pack case 200. Unlike the same, in an emergency situation inside or outside the battery pack 100, as the button portion 530 is pressed, the coupling between the auxiliary cover and the button portion 530 is easily released, so that the circuit breaker member 600 can be quickly exposed through the internal through hole 300h.

That is, in the battery pack 100 according to the present embodiment, the circuit breaker member 600 can be opened and closed relatively easily and quickly. In this regard, the user can relatively easily access the circuit breaker member 600, and can quickly cut off the electrical connection inside the battery pack 100.

Referring to FIGS. 2, 4 and 5, the battery pack 100 according to the present embodiment may further include a first sealing member 550 which surrounds the outer peripheral surface of the internal through hole 300h, and extends toward the auxiliary cover 510. Here, the first sealing member 550 may be fixed to the outer peripheral surface of the internal through hole 300h together with the auxiliary cover 510, and also may be compressed between the auxiliary cover 510 and the inner cover 310.

As one example, the first sealing member 550 may be made of an insulating resin. As another example, the first sealing member 550 may be made of at least one material selected from polyurethane(US), silicon foam, synthetic rubber, and EPDM (Ethylene-Propylene Diene Monomer). However, the present disclosure not limited thereto, and any material that has electrical insulation performance while sealing between the auxiliary cover 510 and the inner cover 310 can be included in the present embodiment.

Accordingly, in the battery pack 100 according to the present embodiment, the first sealing member 550 can improve sealing performance between the auxiliary cover 510 and the inner cover 310, and also can more effectively prevent the inflow of foreign matters such as water and dust between the auxiliary cover 510 and the inner cover 310.

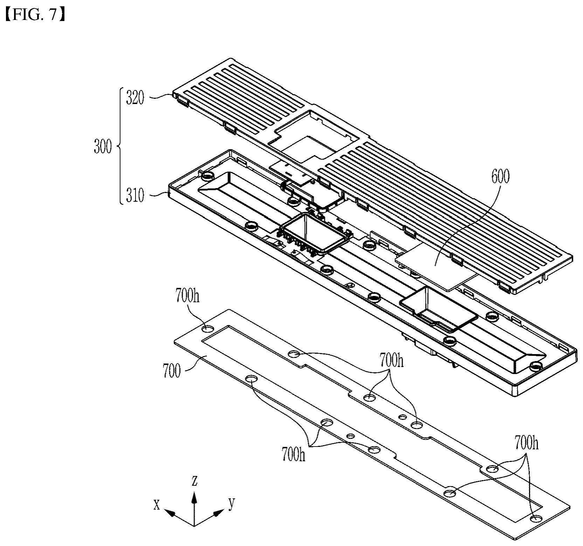

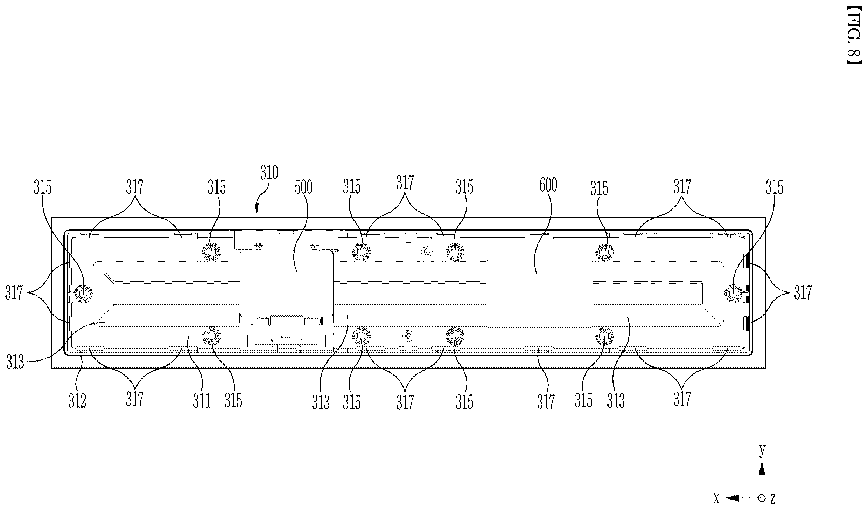

FIG. 7 is an exploded perspective view showing the cover member and the sealing member of FIG. 3. FIG. 8 is a top view of the inner cover of FIG. 7.

Referring to FIGS. 7 and 8, the cover member 300 includes an outer cover 320 and an inner cover 310 located between the outer cover 320 and the opening portion 250. As one example, the cover member 300 may be formed such that an inner cover 310 and an outer cover 320 are sequentially coupled to the opening portion 250 of the pack case 200. As another example, the cover member 300 may be coupled to the opening 250 of the pack case 200 in a state in which the inner cover 310 and the outer cover 320 are coupled in advance.

Accordingly, in the battery pack 100 according to the present embodiment, the outer cover 320 can primarily prevent the inflow of foreign matters such as water and dust from an external environment. In addition, the inner cover 310 can secondarily prevent foreign matters such as water and dust failed to be protected by the outer cover 320 from flowing into the inside of the pack case 200.

Referring to FIGS. 7 and 8, the inner cover 310 includes a central part 311 and an edge part 312 formed along the outer peripheral surface of the central part 311, and at least one protrusion 313 formed in the central part 311.

In the inner cover 310, as shown in FIG. 5, the central part 311 may mean the central surface of the inner cover 310, and the central part 311 may extend along the x-y plane.

Moreover, the edge part 312 is a portion formed along the outer peripheral surface of the central part 311, which may correspond to the corners of the inner cover 310. More specifically, the edge part 312 may extend in a direction toward the outer cover 320 as shown in FIG. 4.

As one example, the edge part 312 may be formed along the outer peripheral surface of the central part 311, and also may extend along the z-axis direction toward the outer cover 320. Here, as shown in FIG. 2, the edge part 312 of the inner cover 310 may cover the outer peripheral surface of the outer cover 320.

As another example, the edge part 312 may be formed along the outer peripheral surface of the central part 311, and also may extend along the outer surface of the pack case 200. Here, the edge part 312 of the inner cover 310 may cover a portion of the outer surface of the pack case 200.

Accordingly, in the battery pack 100 according to the present embodiment, the edge part 312 of the inner cover 310 included in the cover member 300 can also cover the outer peripheral surface of the outer cover 320 and/or the outer surface of the pack case 200, thereby improving sealing performance of the battery pack 100 and also effectively preventing foreign matters such as water and dust from flowing into the inside of the battery pack 100.

In the inner cover 310, the protrusion 313 may protrude toward the outer cover 320. More specifically, the protrusion 313 may have a structure that is inclined in a direction from the central part 311 toward the edge part 312. Here, the structure that is inclined in the direction from the central part 311 toward the edge part 312 may mean that the middle portion of the central part 311 is relatively high and the outer portion of the central part 311 is relatively low. As one example, the protrusion 313 may have a structure that protrudes convexly toward the outer cover 320 on the basis of the bottom surface of the central part 311. Here, as shown in FIGS. 4 and 5, the protrusion 313 may have a symmetrical shape on the basis of the center of the inner cover 310 in the y-z plane and/or the x-z plane.

Accordingly, in the battery pack 100 according to the present embodiment, even if foreign matters such as water and dust flows into the inside of the cover member 300, foreign matters such as water and dust inflowed between the inner cover 310 and the outer cover 320 may move along the inclined structure of the inner cover 310. That is, foreign matters such as water and dust inflowed between the inner cover 310 and the outer cover 320 can move through a path guided by the inner cover 310, and it is possible to effectively prevent foreign matters such as water and dust from flowing into the inside of the pack case 200 in which the battery cell stack 110 and the electrical component module 150 are housed.

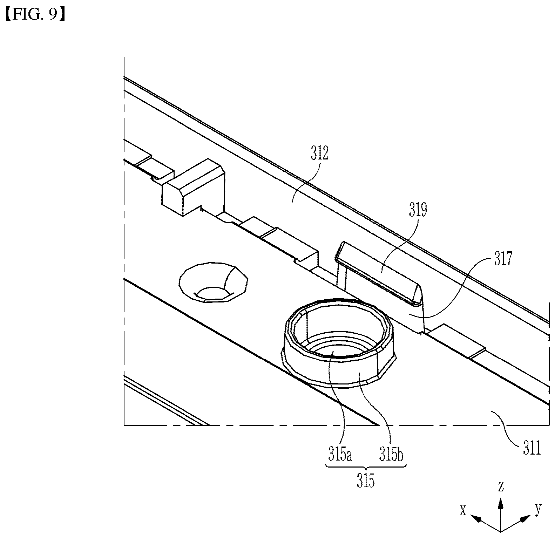

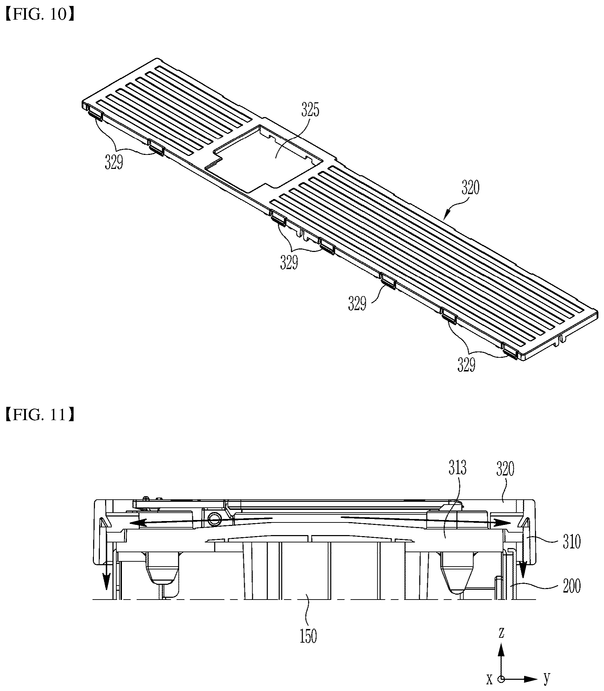

FIG. 9 is an enlarged perspective view showing a portion of FIG. 8. FIG. 10 is a perspective view of the outer cover of FIG. 7.

Referring to FIGS. 9 and 10, the inner cover 310 may further include at least one venting hole 317 formed at a position adjacent to the edge part 312. More specifically, the at least one venting hole 317 may be opened toward the outside of the pack case 200. That is, the at least one venting hole 317 may be formed so as to penetrate through the inner cover 310. In the inner cover 310, the at least one venting hole 317 may be located between a portion where the inner cover 310 and the opening portion 250 come into contact with each other and the edge part 312. As one example, at least one venting hole 317 may be formed at a position spaced apart by a predetermined distance along the edge part 312 of the inner cover 310. Here, the number of venting holes 317 can be appropriately adjusted as necessary, and can be adjusted to a degree that can effectively discharge foreign matters such as water and dust while maintaining the sealing property and rigidity of the inner cover 310.

Accordingly, in the battery pack 100 according to the present embodiment, foreign matters such as water and dust inflowed between the inner cover 310 and the outer cover 320 may move along the protrusion 313 of the inner cover 310, and foreign matters such as water and dust that have moved along the protrusion 313 may be discharged to the outside through the venting hole 317. That is, foreign matters such as water and dust inflowed between the inner cover 310 and the outer cover 320 can be removed through the venting hole 317, thereby effectively preventing foreign matters such as water and dust from flowing into the inside of the pack case 200.

Referring to FIGS. 9 and 10, the inner cover 310 may include at least one coupling portion 315 that is located between the protrusion 313 and the edge part 312, and is formed in an upper part of the outer peripheral surface of the opening portion 250. Here, the coupling portion 315 may include a coupling hole 315a and a boss portion 315b extending along the outer peripheral surface of the coupling hole 315a. More specifically, the boss portion 315b may protrude toward the outer cover 320.

Accordingly, in the battery pack 100 according to the present embodiment, the inner cover 310 can prevent foreign matters such as water and dust inflowed between the inner cover 310 and the outer cover 320 from flowing into the coupling portion 315, through the boss portion 315b formed on the outer peripheral surface of the coupling portion 315.

Referring to FIGS. 3 and 9, the battery pack 100 according to the present embodiment may further include at least one bolting member 800 that penetrates through the at least one coupling portion 315. More specifically, the bolting member 800 may penetrate through the coupling hole 315a included in the coupling portion 315. Here, the coupling portion 315 and the bolting member 800 may be bolt-coupled to each other, so that the inner cover 310 and the pack case 200 can be fixed to each other.

As one example, the bolting member 800 may be made of a material such as stainless steel or a carbon steel material for machine structure (e.g., SC45C). As another example, the bolting member 800 may be made of a steel material plated with zinc (Zn) or trivalent chromium (Cr³⁺). However, the present disclosure is not limited thereto, and any material having a sufficient rigidity to stably fix the inner cover 310 and the pack case 200 can be applied to the present embodiment.

Accordingly, in the battery pack 100 according to the present embodiment, the inner cover 310 can be stably fixed to the pack case 200 by a bolt coupling between the coupling portion 315 and the bolting member 800, and also can prevent the inflow of foreign matters such as water and dust between the inner cover 310 and the pack case 200.

Referring to FIGS. 3 and 7, the battery pack 100 according to the present embodiment may further include a second sealing member 700 located between the inner cover 310 and the opening portion 250. Here, the second sealing member 700 may extend along a surface where the outer peripheral surface of the opening portion 250 and the inner cover 310 come into contact with each other. Further, the second sealing member 700 may have a structure for avoiding a portion where at least one venting hole 317 formed in the inner cover 310 is located.

Further, the second sealing member 700 may include at least one through hole 700h formed in a lower part of the at least one coupling portion 315, respectively. Here, the bolting member 800 can pass through the through hole 700h and be bolt-coupled together with the coupling portion 315. That is, the second sealing member 700 may be fixed to the pack case 200 together with the inner cover 310 and also compressed between the inner cover 310 and the pack case 200.

As one example, the second sealing member 700 may be made of an insulating resin. As another example, the second sealing member 700 may be made of at least one material selected from polyurethane (US), silicon foam, synthetic rubber, and EPDM(Ethylene-Propylene Diene Monomer). However, the present disclosure is not limited thereto, and any material that has electrical insulation properties while sealing between the cover member 300 and the pack case 200 can be included in the present embodiment.

Accordingly, in the battery pack 100 according to the present embodiment, the second sealing member 700 can improve sealing performance between the pack case 200 and the cover member 300, and can more effectively prevent the inflow of foreign matters such as water and dust between the inner cover 310 and the pack case 200.

Referring to FIGS. 2, 9 and 10, in the battery pack 100 according to the present embodiment, the outer cover 320 may include at least one external hooking portion 329 which is formed on the outer peripheral surface of the outer cover 320, and protrudes toward the edge part 312. In addition, the inner cover 310 may include at least one internal hooking portion 319 which is formed on the edge part 312, and protrudes toward the central part 311. As one example, the internal hooking portion 319 and the external hooking portion 329 have a structure having a snap-fit shape, and the internal hooking portion 319 and the external hooking portion 329 may have a structure that couples with each other. That is, the internal hooking portion 319 and the external hooking portion are hook-coupled, so that the inner cover 310 and the outer cover 320 can be fixed to each other. As one example, as shown in FIG. 6, the internal hooking portion 319 may be formed on an upper part of the venting hole 317. That is, the pair of the internal hooking portion 319 and the external hooking portion 329 that are hook-coupled to each other may be formed in an upper part of the venting hole 317, respectively.

Accordingly, in the battery pack 100 according to the present embodiment, the cover member 300 allows the inner cover 310 and the outer cover 320 to be stably fixed to each other by hook coupling, and also can effectively prevent the inflow of foreign matters such as water and dust between the inner cover 310 and the outer cover 320.

FIG. 11 is an enlarged cross-sectional view showing a portion of the cross section taken along the a-a' axis of FIG. 1.

Referring to FIGS. 2, 3, 7 and 11, in the battery pack 100 according to the present embodiment, the cover member 300 can primarily prevent the inflow of foreign matters such as water and dust from an external environment by the external cover 320. Further, in the cover member 300, foreign matters such as water and dust that have flowed into the outer cover 320 may be located between the inner cover 310 and the outer cover 320. At this time, as shown in FIG. 8, foreign matters such as water and dust inflowed between the inner cover 310 and the outer cover 320 may move along the inclined structure of the protrusion 313 of the inner cover 310. In addition, as shown in FIG. 8, foreign matters such as water and dust that have moved along the inclined structure of the protrusion 313 of the inner cover 310 may be discharged toward the outside of the pack case 200 through the venting hole 317.

Accordingly, in the battery pack 100 according to the present embodiment, the cover member 300 effectively prevents foreign matters such as water and dust from flowing into the pack case 200 from the external environment of the battery pack 100, and also some of the foreign matters that have inflowed can be effectively discharged to the outside of the pack case 200. That is, the battery pack 100 according to the present embodiment cuts off the inflow of water and dust into the pack case 200 in a general use environment of the battery pack 100, thereby ensuring waterproof and dustproof performance of IP (Identification code for Protection) 55 level.

A device according to another embodiment of the present disclosure includes the battery pack described above. Such devices can be applied to vehicle means such as an electric bike, an electric vehicle, and a hybrid electric vehicle, but are not limited thereto, and can be applied to various devices capable of using a battery module and a battery pack including the same, which also falls within the scope of the present disclosure.

Although the invention has been described in detail with reference to preferred embodiments thereof, the scope of the present disclosure is not limited thereto, and various modifications and improvements can be made by those skilled in the art using the basic concepts of the present disclosure, which are defined in the appended claims, which also falls within the scope of the present disclosure.

### [Description of Reference Numerals]

100: battery pack
110: battery cell stack
150: electrical component module
200: pack case
250: opening portion
300: cover member
300h: internal through hole
310: inner cover
311: central part
312: edge part
315: coupling portion
317: venting hole
319: internal hooking portion
320: outer cover
325: external through hole
329: external hooking portion
400: lower cover
500: circuit breaker cover section
510: auxiliary cover
511: cover surface
515: first fixing portion
519: first hooking portion
530: button portion
531: button surface
531p: button protrusion
535: second fixing portion
539: second hooking portion
550: first sealing member
570: spring portion
600: circuit breaker member
700: second sealing member
700h: through hole
800: bolting member

## Claims

1. A battery pack comprising:
a battery cell stack in which a plurality of battery cells are stacked;
a pack case which includes an opening portion whose at least one surface is opened, and in which the battery cell stack is housed;
a circuit breaker(CB) member which is located between the battery cell stack and the opening portion, and is electrically connected to the battery cell stack; and
a cover member which covers the opening portion,
wherein the cover member includes a through hole through which the circuit breaker member is exposed to the outside, and a circuit breaker cover section that opens and closes the through hole.

2. The battery pack of claim 1, wherein:
the cover member includes an outer cover, and an inner cover located between the outer cover and the opening portion.

3. The battery pack of claim 2, wherein:
the through hole includes an internal through hole and an external through hole,
the inner cover is formed with the inner through hole and the circuit breaker cover section, and
the outer cover is formed with an external through hole through which the circuit breaker cover section is exposed to the outside.

4. The battery pack of claim 3, wherein:
the inner cover is formed with a pair of spring portions located adjacent to the internal through hole, and
the pair of spring portions and the circuit breaker cover section are coupled with each other.

5. The battery pack of claim 4, wherein:
the pair of spring portions are integrated with the inner cover.

6. The battery pack of claim 4, wherein:
the circuit breaker cover section includes an auxiliary cover that covers the internal through hole and a button portion that covers the pair of spring portions, and
the portions where the button portion and the auxiliary cover come into contact with each other are coupled to and released from each other.

7. The battery pack of claim 6, wherein:
the circuit breaker cover section further comprises a first sealing member that surrounds an outer peripheral surface of the internal through hole, and extends toward the auxiliary cover.

8. The battery pack of claim 6, wherein:
the button portion is formed such that a side surface opposite to the side surface in contact with the auxiliary cover is mutually coupled with the pair of spring portions, and
the auxiliary cover is formed such that a side surface opposite to the side surface in contact with the button portion is mutually coupled with the outer peripheral surface of the internal through hole.

9. The battery pack of claim 8, wherein:
when a portion coupled to the pair of spring portions is pressed in the button portion,
the coupling between the button portion and the auxiliary cover is released, and the auxiliary cover is opened in a direction toward the outside.

10. The battery pack of claim 9, wherein:
the auxiliary cover includes a first hooking portion that protrudes in a direction toward the button portion, and
the button portion includes a second hooking portion that protrudes in a direction toward the auxiliary cover,
wherein the first hooking portion and the second hooking portion are hook-coupled with each other.

11. The battery pack of claim 9, wherein:
the first hooking portion is located at an upper part of the second hooking portion, and
when a side surface coupled to the pair of spring portions is pressed in the button portion, the hook coupling between the first hooking portion and the second hooking portion is released.

12. The battery pack of claim 2, wherein:
the inner cover further includes a central part, an edge part formed along an outer peripheral surface of the central part, and at least one protrusion formed in the central part.

13. The battery pack of claim 12, wherein:
the protrusion has a structure that protrudes toward the outer cover, and is inclined in a direction from the central part toward the edge part.

14. The battery pack of claim 13, wherein:
the inner cover further includes at least one venting hole formed at a position adjacent to the edge part, and
the at least one venting hole is opened toward the outside of the pack case.

15. The battery pack of claim 13, wherein:
the edge part extends in a direction toward the outer cover, and covers the outer peripheral surface of the outer cover.

16. The battery pack of claim 15, wherein:
the outer cover includes at least one outer hooking portion which is formed on an outer peripheral surface of the outer cover, and protrudes toward the edge part, and
the inner cover includes at least one inner hooking portion which is formed on the edge part, and protrudes toward the central part,
wherein the inner hooking portion and the outer hooking portion are hook-coupled with each other, so that the inner cover and the outer cover are fixed to each other.

17. The battery pack of claim 16, wherein:
a pair of the inner hooking portion and the outer hooking portion that are hook-coupled with each other are respectively formed at an upper part of the venting hole.

18. The battery pack of claim 13, wherein:
the inner cover includes at least one coupling portion which is located between the protrusion and the edge part, and is formed on an upper part of the outer peripheral surface of the opening portion, and
the inner cover further includes at least one bolting member which penetrates through each of the at least one coupling portion,
wherein the coupling portion and the bolting member are bolt-coupled to fix the inner cover and the pack case to each other.

19. The battery pack of claim 18, wherein:
the outer peripheral surface of the coupling portion protrudes toward the outer cover.

20. The battery pack of claim 18,
further comprising a second sealing member which is located between the inner cover and the opening portion,
wherein the second sealing member includes at least one through hole formed in a lower part of the at least one coupling portion, respectively, and
wherein the coupling portion and the through hole are volt-coupled with the bolting member.
